# EUROPEAN PATENT SPECIFICATION

(11) **EP 1 012 076 B1**
(45) Date of publication and mention of the grant of the patent: **26.06.2002**
(21) Application number: 98910764.4
(22) Date of filing: 23.03.1998
(51) Int. Cl.: B65G 1/20, B65G 1/04, B65G 1/16

(54) **STORAGE SYSTEM**
LAGERSYSTEM
SYSTEME DE STOCKAGE

(30) Priority: 24.03.1997 FI 971223
(43) Date of publication of application: 28.06.2000
(73) Proprietor: Lipu Oy, 59800 Kesälahti (FI)
(72) Inventor: KÄRKKÄINEN, Seppo, FIN-59800 Kesälahti (FI)
(74) Representative: Heikkinen, Esko Juhani
(86) International application number: FI9800251
(87) International publication number: WO9842600

(56) References cited:
- EP-A- 0 267 178
- DE-C- 3 543 191
- US-A- 1 275 983
- US-A- 4 572 382
- US-A- 5 005 712
- US-A- 5 301 824

## Description

### Background of the invention

The invention pertains to the field of material handling and relates to a storage system, in which goods are stored on supports placed on top of each other. The invention is suitable for use especially in the storage of relatively bulky goods handled with cranes, such as large plates and bars, in cases where it is desirable to save warehousing floor area.

In engineering workshops, for instance, there is often a need for storing very large amounts of varied metal sheets. In most cases, the sheets are kept in piles on the floor, and thus they may require a very large floor area. The sheets are usually transferred with a bridge crane, which grips the sheet either from above by means of magnets or suction pads, or from the sides by means of supports. In some cases, the sheets are stored vertically on edge, and in such cases the sheets are gripped from one side alone with grab loaders for transfer. Nonetheless, it is often difficult to provide suficciently safe transfer and storage in a vertical position.

US patent specification 1 275 983 discloses a truck with a tier of pivotable arms mounted on two slightly inclined standards leaning against each other in order to achieve better static stability. The arms of the standards are pivoted at their rear ends.

DE patent specification 35 43 191 discloses a movable rack system, comprising pivotable shelves on top of each other, whose axes are located in the same horizontal plane. The rack system is connected with a separate stationary rotating apparatus comprising a belt, by means of which the desired number of shelves starting from the top can be turned into upper position by pressing their rear end with the belt.

### General description of the invention

A storage system as defined in claim 1 has now been invented. The remaining claims describe a number of preferred embodiments of the invention.

The system comprises supports on top of each other, which have been mounted for pivotal movement between their ends from the lower position upwards and vice versa. The pivot point of an upper support is located behind that of a lower support. The goods can be placed on a support with this in its lower position. When the supports above this support have been turned into upper position, there is optimal access to the support below. The warehouse requires a small floor area. Transfer and storage are still safe, since they can be carried out by means of ordinary cranes. The handling is also easily automated, and the transfer distances e.g. in production can be made very short.

The invention is particularly suitable for the storage of sheet-like and bar-like bodies.

### Drawings

The accompanying schematic drawings are integrated in the detailed description of the invention.

Figure 1 is a lateral view of the system of the invention. The system comprises four supports, which are in their lower position in the figure.

Figure 2 shows a system of figure 1 with the two uppermost supports in their upper position.

Figure 3 is an axonometric view of a system corresponding to figure 1. The system includes support couples on which sheets are supported.

Figure 4 is a lateral view of a second system in accordance with the invention.

### Detailed description of the invention

The system in accordance with the invention comprises at least two supports on top of each other. They have been mounted for pivotal movement between their ends on a horizontal shaft, the pivot point of the upper support being in each case located behind that of the lower support. The system also includes an appropriate equipment, for instance hydraulic, for turning the shelves. In practical operation, there is usually more than two supports.

When goods are loaded on or retrieved from the support, the support may be in the lower position. If the supports above this are in their upper position, this readily provides access also for the operation of devices used on conventional plants, such as trucks or bridge cranes.

If the supports are equally long, they will form a staggered construction. Especially in that case, the supports can be mounted on bearings in a frame tilted backwards. The tilt angle (in the vertical plane) may be e.g. in the range from 20 to 50°, such as from 30 to 45°.

The support may be a relatively narrow beam or a broader shelf. Especially in the case of beam-like supports, there may be two or more in parallell, which provides a construction particularly suitable for the storage of sheets or bars.

The support may be intended for use as a shelf, on which the goods are placed. However, the support may also serve as a suspension bar.

The pivot point is located between the ends of the support, in other words, the support is a double-arm lever. In this case the rear end comprises an arm for turning the support. The rotating equipment comprise a rotation means for turning the shelves from the lower position into the upper position. The lever arms are appropriately in a suitable angle, for instance so that, with the support horizontally positioned, the rear arm is perpendicular to a straight line through the pivot points. The shelves are preferably turned into upper position from the top one at a time

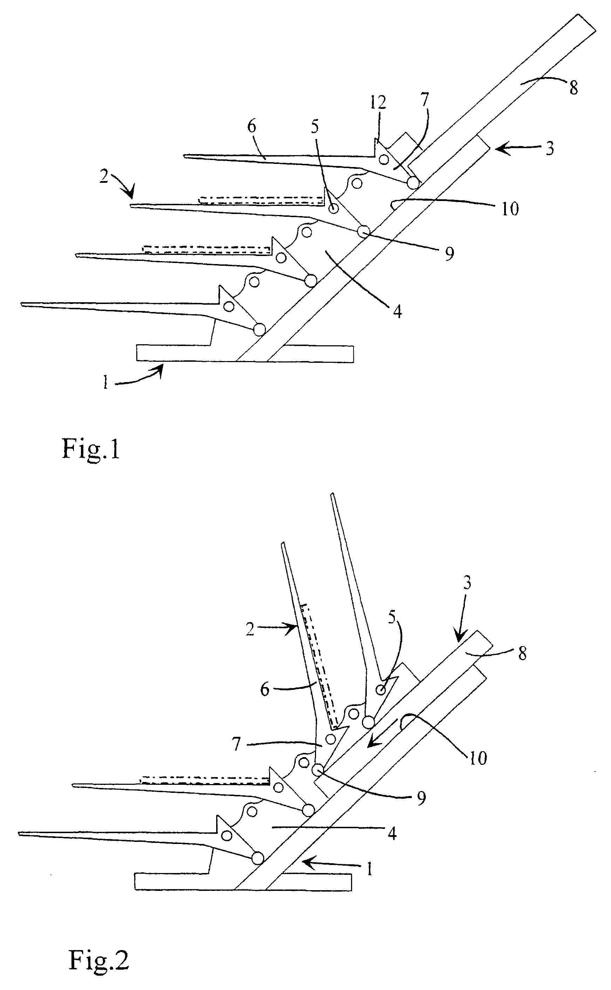

The rack system in figures 1 and 2 has a frame 1, supports 2 in this, and a support rotating gear 3. The frame is fixed and supported on the warehouse floor or any other support structures in a suitable manner.

Frame 1 includes a frame beam 4 tilted backwards. At its upper edge horizontal drillings are provided at regular intervals, supports 2 being mounted onto bearings on shafts 5 in the drillings at desired intervals. The front part of the support constitutes the support arm 6 proper and the rear part the swinging arm 7 with which support 2 can be turned. The turning can be accomplished by pressing or pulling.

The rotating gear 3 for the supports comprises a movable pusher 8. In this case, the pusher is a bar or a beam, whose trajectory passes through the rear ends of swinging arms 7. When pusher 8 is pushed from its upper position downwards, the lower end of the pusher pushes arm 7 downwards, thus turning support 2 until the arm end has slided from the pusher end onto its upper surface. Support 2 is then in its upper position and pusher 8 prevents the support from swinging down. Consequently, pusher 8 turns each support 2 separately, starting from the uppermost. When pusher 8 is pulled up, supports 2 drop into the lower position accordingly.

Pusher 8 may also have a telescopic construction, comprising two or more sections in parallel or fitting into each other, which, when pulled out, form a long body, swinging arms 7 being supported on its upper surface as described above. Such a pusher 8 has the advantage that, with its sections retracted, supports 2 being in their upper position, it requires less space above the supports.

Pusher 8 may also be a shorter body, which is not used for locking supports 2 in the upper position, a separate locking mechanism being provided to this end. The locking mechanism may comprise for instance a spring-operated bolt, which is closed or opened by pusher 8 as it passes by swinging arm 7.

To reduce friction between pusher 8 and swinging arm 7, a wheel 9 is provided at the end of the swinging arm. The lower surface of pusher 8 runs on a slide surface 10 of frame beam 4.

The tilt angle of frame beam 4, the angle of support 2, the length of the swinging arm 7 of the support and the thickness of pusher 8 are selected as a function of the extent and force desired for turning the supports.

The upper position is preferably limited so as to avoid that the centre of gravity of the load on support 2 is located behind its supporting point. It is also preferable that the weight of support 2 and the load on this is exerted as near the pivot point as possible, so that the weight in the upper position is exerted on frame beam 4 as completely as possible, without stressing pusher 8. However, as the weight is exerted slitghtly in front of the pivot point, support 2 will drop automatically when pusher 8 is lifted.

Supports 2 are connected with a suitable stopper, which determines the lower position of the support. The stopper may consist of a mechanical obstacle provided in frame 1 or support 2. The lower position can also be limited by giving swinging arm 7 a length greater than the distance between the pivot point of the support and slide surface 9.

Beam 4 can be a channel iron, allowing supports 2 to be practically placed in the channel and mounted onto bearings on each side of the beam, the beam bottom acting as a slide surface 10. The channel iron may consist of two L-shaped beams which may have an appropriate gap between their lower legs. Nevertheless, beam 4 may be for instance a T beam turned downwards.

Pusher 8 is most appropriately actuated by a hydraulic cylinder. The actuating gear may, however, also be based on chain or rack transmission, for instance.

When, in the solution corresponding to figure 1, pusher 8 is first pulled upwards by means of the hydraulic cylinder, pressure will first prevail below the cylinder piston. When the end of swinging arm 7 slides to the lower end of pusher 8, the part above the piston will be pressurised.

The upper surface of pusher 8 can be tilted also in the direction of movement, or sliding surface 10 may be in an inclined position relative to the line of the rear ends of arms 7, and then separate supports 2 equipped with an equally long swinging arm 7 will turn at different angles. A similar effect is obtained with the use of swinging arms 7 of different lengths.

Support 2 may have a bifurcate swinging arm, whose branches extend on different sides of beam 4. This enables support 2 to be turned by means of two or more co-operating pushers.

A plurality of separate frames 1 including supports 2 can be placed in line so that the supports co-operate. Such a design is particularly suitable for the storage of relatively long goods such as bars.

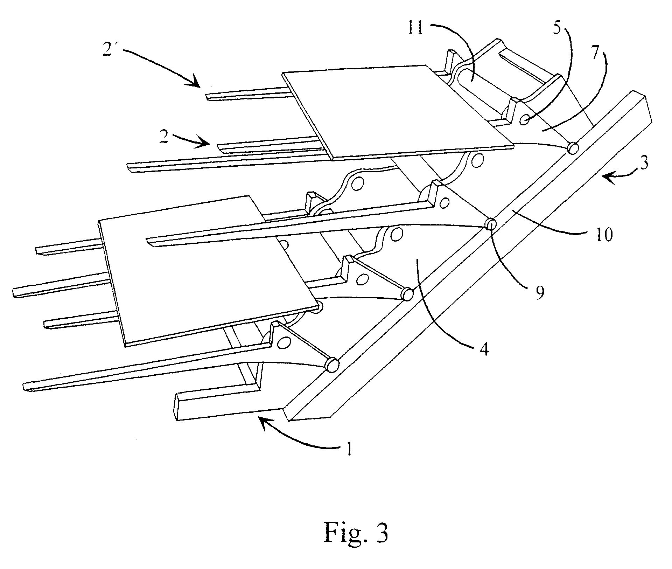

In the design illustrated in figure 3, two support beams 4 are provided next to each other. Supports 2 are pivoted on one of these and supports 2' on the other. Supports 2 and 2' are connected by a shaft 11, which makes them turn together. If supports 2 and 2' are turned with sufficient force by means of swinging arm 7, no swinging arm will be needed on support 2'. For additional force, support 2' can also be designed such that supports can be turned by means of it.

The design in figure 3 is particularly suitable for the storage of relatively long goods. Such goods are placed transversely on the supports. When plates, for instance, are stored in this manner, a very small floor area is called for, and the space between the racks can be maximally exploited for storage, since no extra free space for cranes is required. Transfer and storage are still safe, because the plates can be gripped and transferred in horizontal position. The plates can be securely supported in storage position, where no handling is required. Also, the handling can be easily automated. The arrangement also allows very short transfer distances during production.

At the rear end of swinging arm 6, in front of the pivot point, there is a perpendicular support projection 12, on which the load on support 2 can be supported when the support turns into upper position. Supports 2 may also comprise support means of other types. For instance, when the support is in lower position, e.g. upwards or forwards directed projections may be provided on the upper surface, the goods being supported by these when the support is lifted.

If desired, supports 2 can be placed laterally overlapping. Supports 2 may also have different lengths, with the uppermost supports longer than the lowermost.

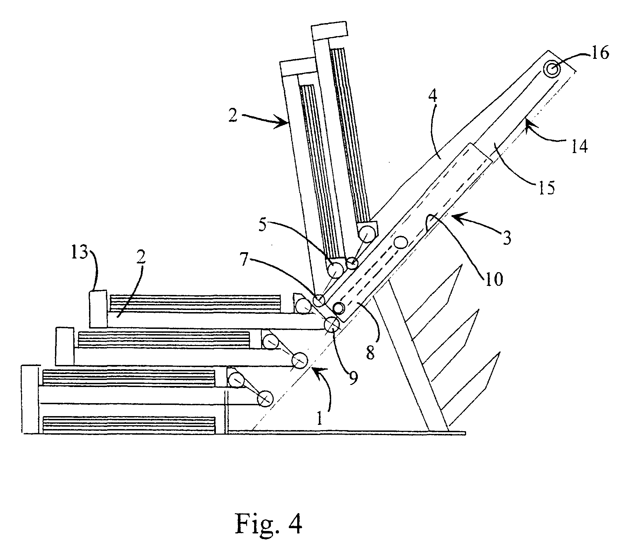

In the system of figure 4, an upwards directed edge projection 13 is provided at the front edge of support 2. When supports 2 have been raised to the upper position, the support projection 13 of the lower support bears against the lower surface of the upper support, and thus the upper support is locked in position. This allows pusher 8 to be very short, since it is not needed for maintaining the upper shelves in the upper position. Accordingly, less space is required behind for pusher 8 and its actuating gear 14.

The actuating gear 14 of pusher 8 in figure 4 comprises a hydraulic cylinder 15, whose upper end is fixed with a pin 16 in a hole in beam 4. There is a plurality of fixing holes in beam 4. When support 2 is first lifted, cylinder 15 is fixed in the uppermost hole. When, in this position, as many supports (e.g. two) have been turned as pusher 8 can reach, the cylinder is shifted down to the following hole. Such a system requires very small space behind, and may thus be placed quite close to a wall, for instance.

The space under beams 4 can be utilised in any suitable manner. In storage use, it may accommodate a small system in accordance with the invention, or an ordinary rack system.

## Claims

1. Storage system comprising a frame (1), and on this, at least two supports (2) on top of each other, the supports (2) having a front end and a rear end and being mounted for pivotal movement in the frame (1) between the front end and the rear end on horizontal shafts (5, 11), the rear end of the support having an arm (7) for turning the support, and the system comprising rotating equipment (3) for turning the supports with the rear end arm from a lower position into an upper position and vice versa, **characterised in that** the shafts (5, 11) of the upper support (2) are located behind that of the lower support.

2. System as claimed in claim 1, **characterised in that** the plane through the mounting shafts of the supports (2) is in a 20 to 50°, such as 30 to 35° tilt angle from the vertical plane.

3. System as claimed in claim 1 or 2, **characterised in that** the supports (2) can be turned into upper position one at a time, starting from the uppermost.

4. System as claimed in any of claims 1 to 3, **characterised in that** the rotating equipment (3) has a pusher (8), by means of which the supports (2) can be turned by pressing or pulling the arm (7) formed by the rear end of the support.

5. System as claimed in claim 3 or 4, **characterised in that** the pusher (8) is a body crossing the line formed by the rear ends of the supports (2).

6. System as claimed in claim 5, **characterised in that**, as the support (2) is in upper position, the rear end (7) of the support bears against the upper surface of the pusher (8).

7. System as claimed in any of claims 4 to 6, **characterised in that** the rotating equipment (3) has a hydraulic cylinder (15) for actuating the pusher (8).

8. System as claimed in claim 7, **characterised in that** the attachment point of the hydraulic cylinder to the frame is variable.

9. System as claimed in any of claims 5 to 8, **characterised in that** the pusher (8) is a bar or beam.

10. System as claimed in any of claims 1 to 9, **characterised in that**, at the front edge of the support (2), a vertical edge projection (13) is provided, on which the front edge of the upper support is supported when the supports are in a raised position.

11. System as claimed in any of claims 1 to 10, **characterised in that** it comprises at least two adjacent supports (2, 2').

12. System as defined in any of claims 1 to 11, **characterized in that** the arm (7) of the support is in a suitable angle so that, with the support horizontally positioned, the rear arm is perpendicular to a straight line through the pivot points.

13. System as defined in any of claims 1 to 12, **characterized in that** a wheel (9) is provided in the end of the arm (7).

14. System as defined in any of claims 1 to 13, **characterized in that** the upper position of the support (2) is limited so as to avoid that the centre of gravity of the load on the support is located behind its supporting point.

15. System as defined in any of claims 1 to 14, **characterized in that** the weight on the support (2) and the load on this is exerted as near the pivot point as possible.

16. System as defined in any of claims 1 to 15, **characterized in that** the support (7) has a perpendicular support projection in front of the pivot point, on which the load on the support can be supported when the support turns into upper position.

17. System as defined in any of claims 4 to 16, **characterized in that** the pusher (8) has a telescopic construction comprising two or more sections in parallel or fitting into each other.

18. A use of storage system as defined in any of claims 1 to 17 for storing goods.

## Patentansprüche

1. Lagersystem, das einen Rahmen (1) und auf diesem mindestens zwei Ablagen (2) übereinander aufweist, wobei die Ablagen (2) ein vorderes Ende und ein hinteres Ende besitzen und für Drehbewegung in dem Rahmen (1) zwischen dem vorderen Ende und dem hinteren Ende auf horizontalen Wellen (5, 11) montiert sind, das hintere Ende der Ablage einen Arm (7) zum Drehen der Ablage besitzt, und das System eine Rotiereinrichtung (3) zum Drehen der Ablagen mit dem Arm an hinteren Ende von einer unteren Position in eine obere Position und umgekehrt aufweist, **dadurch gekennzeichnet, dass** die Wellen (5, 11) der oberen Ablage (2) hinter derjenigen der unteren Ablage angeordnet sind.

2. System nach Anspruch 1, **dadurch gekennzeichnet, dass** die Ebene durch die Montierwellen der Ablagen (2) in einem Neigungswinkel von 20 bis 50°, wie 30 bis 35°, gegenüber der vertikalen Ebene ist.

3. System nach Anspruch 1 oder 2, **dadurch gekennzeichnet, dass** die Ablagen (2) eine nach der anderen in die obere Position gedreht werden können, beginnend von der obersten.

4. System nach einem der Ansprüche 1 bis 3, **dadurch gekennzeichnet, dass** die Rotiereinrichtung (3) einen Schieber (8) besitzt, mittels welchem die Ablagen (2) durch Drücken oder Ziehen des Arms (7), der an dem hinteren Ende der Ablage gebildet ist, gedreht werden können.

5. System nach Anspruch 3 oder 4, **dadurch gekennzeichnet, dass** der Schieber (8) ein Körper ist, der die durch die hinteren Enden der Ablagen (2) gebildete Gerade kreuzt.

6. System nach Anspruch 5, **dadurch gekennzeichnet, dass**, wenn die Ablage (2) in der oberen Position ist, das hintere Ende (7) der Ablage gegen die obere Fläche des Schiebers (8) drückt.

7. System nach einem der Ansprüche 4 bis 6, **dadurch gekennzeichnet, dass** die Rotiereinrichtung (3) einen Hydraulikzylinder (15) zum Betätigen des Schiebers (8) besitzt.

8. System nach Anspruch 7, **dadurch gekennzeichnet, dass** der Befestigungspunkt des Hydraulikzylinders an dem Rahmen variabel ist.

9. System nach einem der Ansprüche 5 bis 8, **dadurch gekennzeichnet, dass** der Schieber (8) ein Stab oder Balken ist.

10. System nach einem der Ansprüche 1 bis 9, **dadurch gekennzeichnet, dass** an dem vorderen Rand der Ablage (2) ein vertikaler Randvorsprung (13) vorgesehen ist, auf welchem der vordere Rand der oberen Ablage gelagert ist, wenn die Ablagen in einer angehobenen Position sind.

11. System nach einem der Ansprüche 1 bis 10, **dadurch gekennzeichnet, dass** es mindestens zwei benachbarte Ablagen (2, 2') aufweist.

12. System nach einem der Ansprüche 1 bis 11, **dadurch gekennzeichnet, dass** der Arm (7) der Ablage unter einem geeigneten Winkel derart ist, dass, wenn die Ablage horizontal positioniert ist, der hintere Arm senkrecht zu einer geraden Linie durch die Drehpunkte ist.

13. System nach einem der Ansprüche 1 bis 12, **dadurch gekennzeichnet, dass** ein Rad (9) in dem Ende des Arms (7) vorgesehen ist.

14. System nach einem der Ansprüche 1 bis 13, **dadurch gekennzeichnet, dass** die obere Position der Ablage (2) begrenzt ist, um zu vermeiden, dass der Schwerpunkt der Belastung auf der Ablage hinter deren Lagerpunkt angeordnet ist.

15. System nach einem der Ansprüche 1 bis 14, **dadurch gekennzeichnet, dass** das Gewicht der Ablage (2) und der Belastung auf dieser so nah wie möglich an dem Drehpunkt ausgeübt wird.

16. System nach einem der Ansprüche 1 bis 15, **dadurch gekennzeichnet, dass** die Ablage (7) einen rechtwinkligen Unterstützungsvorsprung vor dem Drehpunkt besitzt, auf welchem die Belastung der Ablage gelagert werden kann, wenn die Ablage in die obere Position dreht.

17. System nach einem der Ansprüche 4 bis 16, **dadurch gekennzeichnet, dass** der Schieber (8) eine teleskopartige Konstruktion besitzt, welche zwei oder mehr parallele oder ineinander passende Sektionen aufweist.

18. Verwendung eines Lagersystems nach einem der Ansprüche 1 bis 17 zum Lagern von Waren.

## Revendications

1. Système de stockage qui comprend un bâti (1) et au moins deux supports (2) montés l'un au-dessus de l'autre sur celui-ci, chaque support (2) incluant une extrémité avant et une extrémité arrière et étant monté entre l'extrémité avant et l'extrémité arrière sur un arbre horizontal (5, 11) pour se déplacer à pivotement dans le bâti (1), l'extrémité arrière du support comportant un bras (7) pour faire tourner le support, et le système comprenant un équipement de rotation (3) pour faire tourner les supports au moyen du bras d'extrémité arrière, à partir d'une position basse vers une position haute et vice versa, **caractérisé en ce que** l'arbre (5, 11) du support supérieur (2) est situé dans chaque cas derrière celui du support inférieur.

2. Système selon la revendication 1, **caractérisé en ce que** le plan qui passe par les arbres de montage des supports (2) est un plan incliné de 20 à 50°, par exemple de 30 à 35°, par rapport au plan vertical.

3. Système selon la revendication 1 ou 2, **caractérisé en ce que** les supports (2) peuvent être tournés vers la position haute un à la fois, en débutant par le plus haut.

4. Système selon l'un quelconque des revendications 1 à 3, **caractérisé en ce que** l'équipement de rotation (3) comporte un poussoir (8) au moyen duquel les supports (2) peuvent être tournés en poussant ou en tirant le bras (7) formé par l'extrémité arrière du support.

5. Système selon la revendication 3 ou 4, **caractérisé en ce que** le poussoir (8) est un corps qui croise la ligne formée par les extrémités arrière des supports (2).

6. Système selon la revendication 5, **caractérisé en ce que** l'extrémité arrière (7) du support s'appuie contre la surface supérieure du poussoir (8) lorsque le support (2) est en position haute.

7. Système selon l'une quelconque des revendications 4 à 6, **caractérisé en ce que** l'équipement de rotation (3) comporte un vérin hydraulique (15) pour actionner le poussoir (8).

8. Système selon la revendication 7, **caractérisé en ce que** le point d'attache du vérin hydraulique sur le bâti est variable.

9. Système selon l'une quelconque des revendications 5 à 8, **caractérisé en ce que** le poussoir (8) est une barre ou une poutre.

10. Système selon l'une quelconque des revendications 1 à 9, **caractérisé en ce que** le bord avant du support (2) comporte une saillie verticale (13) de bord sur laquelle le bord avant du support supérieur est supporté lorsque les supports sont en position haute.

11. Système selon l'une quelconque des revendications 1 à 10, **caractérisé en ce qu'**il comprend au moins deux supports adjacents (2, 2').

12. Système selon l'une quelconque des revendications 1 à 11, **caractérisé en ce que** le bras (7) du support est à un angle approprié pour que le bras arrière soit perpendiculaire à une ligne droite passant par les points de pivotement lorsque le support est positionné horizontalement.

13. Système selon l'une quelconque des revendications 1 à 12, **caractérisé en ce qu'**une roue (9) est agencée dans l'extrémité du bras (7).

14. Système selon l'une quelconque des revendications 1 à 13, **caractérisé en ce que** la position haute du support (2) est limitée de façon à éviter que le centre de gravité de la charge disposée sur le support soit située derrière son point de support.

15. Système selon l'une quelconque des revendications 1 à 14, **caractérisé en ce que** le poids sur le support (2) et l'effort sur celui-ci sont appliqués aussi près du point de pivotement que possible.

16. Système selon l'une quelconque des revendications 1 à 15, **caractérisé en ce que** le support (7) comprend, en avant du point de pivotement, une saillie de support perpendiculaire sur laquelle l'effort sur le support peut être supporté lorsque le support tourne vers sa position haute.

17. Système selon l'une quelconque des revendications 4 à 16, **caractérisé en ce que** le poussoir (8) est de structure télescopique qui comprend deux sections ou davantage agencées en parallèle ou s'ajustant l'une dans l'autre.

18. Utilisation d'un système de stockage selon l'une quelconque des revendications 1 à 17 pour stocker des marchandises.
